# EUROPÄISCHE PATENTSCHRIFT

(11) **EP 2 734 888 B1**
(45) Veröffentlichungstag und Bekanntmachung des Hinweises auf die Patenterteilung: **31.10.2018**
(21) Anmeldenummer: 12769075.8
(22) Anmeldetag: 26.09.2012
(51) Int. Cl.: G02B 27/01, B61L 15/00

(54) **LOKFÜHRERSTAND**
LOCOMOTIVE DRIVER'S CAB
POSTE DE CONDUITE DE LOCOMOTIVE

(30) Priorität: 27.09.2011 DE 102011083534
(43) Veröffentlichungstag der Anmeldung: 28.05.2014
(73) Patentinhaber: Siemens Mobility GmbH, 81739 München (DE)
(72) Erfinder: PORSCH, Roland, 95469 Speichersdorf (DE); SCHAEPER, Wilhelm, 91320 Ebermannstadt (DE)
(86) Internationale Anmeldenummer: PCT/EP2012/068936
(87) Internationale Veröffentlichungsnummer: WO 2013/045478

(56) Entgegenhaltungen:
- EP-A2- 0 305 096
- WO-A1-97/31810
- CN-U- 201 499 255
- DE-A1-102007 010 867
- JP-A- 3 116 300
- JP-A- 4 050 041
- JP-A- 5 038 965
- JP-A- 5 038 966
- JP-A- 2007 102 691
- ANDREW RODEN: "Heads up !", INTERNATIONAL RAILWAY JOURNAL, SIMMONS-BOARDMAN PUBLISHING CORP, UNITED STATES, 1. Januar 2008 (2008-01-01), Seiten 30-31, XP001537933, ISSN: 0744-5326

## Beschreibung

Derzeit wird - wie aus der Zeitschrift "ETR", September 2010, Nr. 09, Seiten 532 bis 538 hervorgeht - an einer Standardisierung und Harmonisierung der funktionalen Anordnung und Gestaltung eines zukünftigen europäischen Führerstandes für Lokomotiven und Triebzüge gearbeitet. Dabei ist das Konzept eines Lokführerstandes mit vier Displays entwickelt worden, die unterhalb der Frontscheibe des Lokführerstandes kreisringförmig angeordnet sind. Während der Fahrt des Schienenfahrzeugs muss der Lokführer die Strecke überwachen und zusätzlich die vier Displays beobachten.

Der Erfindung liegt die Aufgabe zugrunde, einen Lokführerstand vorzuschlagen, der dem Lokführer mehr Zeit zur Beobachtung der Strecke ermöglicht und damit zur Erhöhung der Sicherheit im Schienenverkehr beiträgt.

Zur Lösung dieser Aufgabe ist erfindungsgemäß ein Lokführerstand mit einem Frontsichtdisplay mit Anzeige von schienenfahrzeugrelevanten Informationen im Sichtfeld des Lokführers geeignet.

Es sind aus http://de.wikipedia.org/wiki/Head-up-Display Frontsichtdisplays bekannt, die in Kampfflugzeugen zur Anzeige von Informationen zu Avionik, Radar oder Waffensystemen und Automobilen zur Geschwindigkeitsanzeige dienen.

Dokument JP 5 038965 A beschreibt eine Vorrichtung zur Anzeige eines Geschwindigkeitswerts mittels eines Frontsichtdisplays für ein Schienenfahrzeug. Die Anzeige projiziert eine Skala, wobei der Geschwindigkeitswert durch Hervorhebung von Balken der Skala angezeigt wird.

So besteht ein wesentlicher Vorteil des erfindungsgemäßen Lokführerstandes darin, dass bei ihm die schienenfahrzeugrelevanten Informationen im Sichtfeld des Lokführers liegen und daher von diesem zusammen mit der Streckenbeobachtung wahrgenommen werden können. Der Lokführer muss daher seltener als bisher die Displays betrachten und kann sich intensiver als bislang mit der Streckenbeobachtung befassen. Dies trägt auch zur Erhöhung der Verkehrssicherheit bei.

Bei dem erfindungsgemäßen Lokführerstand kann die Projektionsfläche des Frontsichtdisplays unterschiedlich ausgebildet sein; beispielsweise kann die Projektionsfläche als zusätzliche Projektionsscheibe vor oder hinter der Frontscheibe des Lokführerstandes im Sichtfeld des Lokführers liegen. Als besonders vorteilhaft wird es jedoch angesehen, wenn die Frontscheibe des Schienenfahrzeugs Projektionsfläche des Frontsichtdisplays ist.

Die bildgebende Einheit des Frontsichtdisplays ist vorteilhafterweise mit wichtigen Systemen eines Schienenfahrzeugs verbunden, um schienenfahrzeugrelevante Informationen abrufen und auf der Projektionsfläche des Frontsichtdisplays darstellen zu können. Deshalb ist es vorteilhaft, dass die bildgebende Einheit des Frontsichtdisplays mit dem Bediensystem der Fahrzeugsteuerung und dem Bediensystem der Zugsicherung verbunden ist.

Als besonders vorteilhaft wird es angesehen, wenn die bildgebende Einheit des Frontsichtdisplays mit einer derartig ausgebildeten Auswerteeinrichtung eines Kamerasystems an der Front des Schienenfahrzeugs verbunden ist, dass jeweils der Streckenverlauf auf der Projektionsfläche angezeigt wird.

Dabei besteht dann auch die vorteilhafte Möglichkeit, die Auswerteeinrichtung derart auszubilden, dass jeweils der Streckenverlauf mit einem Haltepunkt bei angenommener Vollbremsung auf der Projektionsfläche markiert wird und somit für den Lokführer leicht ablesbar ist.

Vorteilhaft ist es ferner im Hinblick auf die Erhöhung der Verkehrsicherheit, wenn die Auswerteeinrichtung derart ausgebildet ist, dass jeweils der Streckenverlauf unter Erfassung von Hindernissen auf der Projektionsfläche angezeigt wird. Zur weiteren Erleichterung der Arbeit des Lokführers und zur Erhöhung der Verkehrssicherheit trägt bei, wenn bei dem erfindungsgemäßen Lokführerstand die mit zwei gleichartigen Informationen aus verschiedenen Systemen beaufschlagte bildgebende Einheit derart ausgebildet ist, dass sie auf die Informationen aus den verschiedenen Systemen optische Signale unterschiedlicher Farbe abgibt, und das Optikmodul des Frontscheibendisplays zwei Spiegelsysteme in einer derartigen Ausrichtung enthält, dass die zu verschiedenen Informationen gehörenden optischen Signale auf dieselbe Stelle auf der Projektionsfläche auftreffen. Sind die Informationen von beiden Systemen gleich, dann ergibt sich eine gut ablesbare Anzeige auf der Projektionsfläche mit einer Mischfarbe; sind dagegen die Informationen verschieden, ergibt sich eine Anzeige mit einer anderen Farbe und einer anderen Form. Der Lokführer kann somit sofort erkennen, dass die Informationen nicht mehr übereinstimmen, was auf eine gestörte Informationserzeugung in einem der beiden Systeme hindeutet.

Die zwei gleichartigen Informationen können vorteilhafterweise sicherheitsrelevante Informationen sein.

Es ist auch vorteilhaft, wenn die zwei gleichartigen Informationen Geschwindigkeitsinformationen sind und die zu den verschiedenen Geschwindigkeitsinformationen gehörenden optischen Signale jeweils eine Sieben-Segment-Anzeige auf derselben Stelle der Projektionsfläche erzeugen. Sind die Geschwindigkeitsinformationen gleich, dann ergibt sich eine gut lesbare Sieben-Segment-Anzeige in einer einheitlichen Mischfarbe. Weichen die beiden Geschwindigkeitsinformationen voneinander ab, ergibt sich keine gut lesbare Information auf der Projektionsfläche des Frontsichtdisplays, weil sich zwei unterschiedliche Sieben-Segment-Anzeigen überlagern und ein farblich uneinheitliches Bild ergeben.
Zur weiteren Erläuterung der Erfindung ist in
Figur 1 ein Ausschnitt aus einer die Projektionsfläche eines Frontsichtdisplays bildenden Frontscheibe des erfindungsgemäßen Lokführerstandes mit korrekter Anzeige einer Geschwindigkeit und in
Fig. 2 derselbe Ausschnitt jedoch mit einer nicht ordnungsgemäßen Anzeige
   dargestellt.

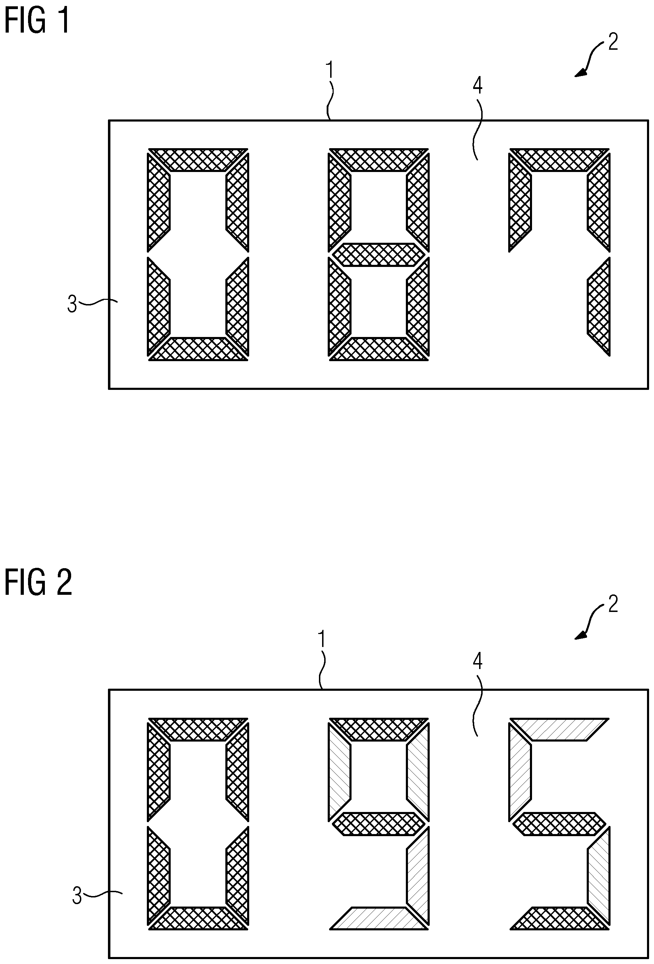

Der in den Figuren 1 und 2 gezeigte Ausschnitt 1 aus einer Frontscheibe 2 eines nicht weiter dargestellten Lokführerstandes bildet auch einen Ausschnitt aus der Projektionsfläche 3 eines nicht weiter dargestellten Frontsichtdisplays, das in bekannter Weise außer der Projektionsfläche 3 eine bildgebende Einheit sowie ein Optikmodul aufweist. Die bildgebende Einheit ist hier allerdings so mit zwei bildgebenden Einrichtungen ausgeführt, dass sie aus zwei Systemen des Schienenfahrzeugs mit Geschwindigkeitsinformationen beaufschlagbar ist und optische Signale unterschiedlicher Farbe, beispielsweise grün und gelb, abgibt. Entsprechend ist das Optikmodul mit zwei Spiegelsystemen ausgerüstet, die so ausgerichtet sind, dass sie die optischen Signale übereinander liegend auf den dargestellten Ausschnitt 1 unter Bildung einer Sieben-Segment-Anzeige 4 für die Geschwindigkeit des Schienenfahrzeugs lenken.

Die Figur 1 zeigt eine korrekte Sieben-Segment-Anzeige 4 mit der Geschwindigkeitsangabe "087". Hier überdecken sich die von den beiden bildgebenden Einrichtungen grün (rechts schraffiert) und gelb (links schraffiert) beleuchteten Segmente der Sieben-Segment-Anzeige 4 vollständig. Die Geschwindigkeitsangabe ist daher für den Lokführer wegen der einheitlich blauen Mischfarbe (kreuzweise schraffiert) auf allen Segmenten gut lesbar und signalisiert ihm außerdem, dass die Geschwindigkeitsmessung mit den beiden Systemen des Schienenfahrzeugs korrekt ist.

Die Fig. 2 zeigt eine gestörte Geschwindigkeitsanzeige, bei der zwar "0" korrekt wieder gegeben ist, weil sie einheitlich die blaue Mischfarbe zeigt. Dies gilt jedoch nicht mehr hinsichtlich der weiteren Ziffern, die blaue Bereiche (kreuzweise schraffiert), grüne Bereiche (rechts schraffiert) und gelbe Bereich (links schraffiert) aufweisen und damit den Lokführer auf eine fehlerhafte Geschwindigkeitsbestimmung hinweisen.

## Patentansprüche

1. Lokführerstand mit einem Frontsichtdisplay (3) mit Anzeige (4) von schienenfahrzeugrelevanten Informationen im Sichtfeld des Lokführers, wobei die Frontscheibe (2) des Schienenfahrzeugs Projektionsfläche (3) des Frontsichtdisplays ist, **dadurch gekennzeichnet, dass** die mit zwei gleichartigen Informationen aus verschiedenen Systemen beaufschlagte bildgebende Einheit des Frontsichtdisplays (3) derart ausgebildet ist, dass sie auf die Informationen aus den verschiedenen Systemen optische Signale unterschiedlicher Farbe abgibt, und
das Optikmodul des Frontsichtdisplays zwei Spiegelsysteme in einer derartigen Ausrichtung enthält, dass die zu verschiedenen Informationen gehörenden optischen Signale auf dieselbe Stelle auf der Projektionsfläche (3) auftreffen.

2. Lokführerstand nach Anspruch 1,
**dadurch gekennzeichnet, dass** die bildgebende Einheit des Frontsichtdisplays mit dem Bediensystem der Fahrzeugsteuerung und dem Bediensystem der Zugsicherung verbunden ist.

3. Lokführerstand nach Anspruch 1 oder 2,
**dadurch gekennzeichnet, dass** die bildgebende Einheit des Frontsichtdisplays mit einer derartig ausgebildeten Auswerteeinrichtung eines Kamerasystems an der Front des Schienenfahrzeugs verbunden ist, dass jeweils der Streckenverlauf auf der Projektionsfläche angezeigt wird.

4. Lokführerstand nach Anspruch 3,
**dadurch gekennzeichnet, dass** die Auswerteeinrichtung derart ausgebildet ist, dass jeweils der Streckenverlauf mit einem Haltepunkt bei angenommener Vollbremsung auf der Projektionsfläche markiert wird.

5. Lokführerstand nach Anspruch 3 oder 4,
**dadurch gekennzeichnet, dass** die Auswerteeinrichtung derart ausgebildet ist, dass jeweils der Streckenverlauf unter Erfassung von Hindernissen auf der Projektionsfläche angezeigt wird.

6. Lokführerstand nach Anspruch 1,
**dadurch gekennzeichnet, dass** die zwei gleichartigen Informationen sicherheitsrelevante Informationen sind.

7. Lokführerstand nach Anspruch 1 oder 6,
**dadurch gekennzeichnet, dass** die zwei gleichartigen Informationen Geschwindigkeitsinformationen sind und die zu den verschiedenen Geschwindigkeitsinformationen gehörenden optischen Signale jeweils eine Sieben-Segment-Anzeige (4) auf derselben Stelle der Projektionsfläche erzeugen.

## Claims

1. Locomotive driver's cab with a front-view display (3) with a display (4) of information relevant to the railway vehicle in the field of view of the driver of the locomotive,
wherein
the windscreen (2) of the railway vehicle is the projection screen (3) of the front-view display,
**characterized in that**
the imaging unit of the front-view display (3) supplied with two similar types of information from different systems is designed such that it outputs optical signals of different color for the information from the different systems, and the optical module of the front-view display contains two mirror systems in such an alignment that the optical signals relating to different information are incident at the same point on the projection screen (3).

2. Locomotive driver's cab according to Claim 1,
**characterized in that**
the imaging unit of the front-view display is connected to the operating system of the vehicle controller and the operating system of the train protection means.

3. Locomotive driver's cab according to Claim 1 or 2,
**characterized in that**
the imaging unit of the front-view display is connected to an evaluation device of a camera system at the front of the railway vehicle that is designed such that the track route is displayed on the projection screen in each case.

4. Locomotive driver's cab according to Claim 3,
**characterized in that**
the evaluation device is designed such that the track route is marked on the projection screen with a stopping point assuming full braking.

5. Locomotive driver's cab according to Claim 3 or 4,
**characterized in that**
the evaluation device is designed such that the track route is displayed on the projection screen with detection of obstructions in each case.

6. Locomotive driver's cab according to Claim 1,
**characterized in that**
the two similar types of information are safety-relevant information.

7. Locomotive driver's cab according to Claim 1 or 6,
**characterized in that**
the two similar types of information are speed information and the optical signals relevant to the different speed information each produce a seven segment display (4) on the same point of the projection screen.

## Revendications

1. Poste de conduite de locomotive, comprenant un affichage (3) visuel avant, ayant des indications (4) d'informations pertinentes pour un véhicule ferroviaire dans le champ de vision du conducteur de la locomotive,
dans lequel la vitre (2) avant du véhicule ferroviaire est une surface (3) de projection de l'affichage visuel avant, **caractérisé en ce que**
l'unité, donnant une image et alimentée par deux informations de même type provenant de systèmes différents, de l'affichage (3) visuel avant, est constituée de manière à donner, aux informations provenant des systèmes différents, des signaux optiques de couleurs différentes et
le module optique de l'affichage visuel avant comporte deux systèmes de miroir en une orientation telle que les signaux optiques appartenant à des informations différentes arrivent au même point sur la surface (3) de projection.

2. Poste de conduite de locomotive suivant la revendication 1, **caractérisé en ce que**
l'unité donnant une image de l'affichage visuel avant est reliée au système de service de la commande du véhicule et au système de service de l'arrêt automatique des trains.

3. Poste de conduite de locomotive suivant la revendication 1 ou 2,
**caractérisé en ce que**
l'unité donnant une image de l'affichage visuel avant est reliée à un dispositif d'exploitation ainsi constitué d'un système de caméra à l'avance du véhicule ferroviaire que respectivement le tracé de la voie soit affiché sur la surface de projection.

4. Poste de conduite de locomotive suivant la revendication 3, **caractérisé en ce que**
le dispositif d'exploitation est ainsi constitué que respectivement le tracé de la voie soit repéré sur la surface de projection par un point d'arrêt en supposant un freinage complet.

5. Poste de conduite de locomotive suivant la revendication 3 ou 4,
**caractérisé en ce que**
le dispositif d'exploitation est ainsi constitué que respectivement le tracé de la voie soit affiché sur la surface de projection en détectant des obstacles.

6. Poste de conduite de locomotive suivant la revendication 1, **caractérisé en ce que**
les deux informations de même type sont des informations pertinentes du point de vue de la sécurité.

7. Poste de conduite de locomotive suivant la revendication 1 ou 6,
**caractérisé en ce que**
les deux informations de même type sont des informations de vitesse et les signaux optiques appartenant aux informations de vitesse différentes produisent respectivement un affichage (4) à sept segments au même point de la surface de projection.
